# EUROPEAN PATENT APPLICATION

(11) **EP 4 714 919 A1**
(43) Date of publication of application: **25.03.2026**
(21) Application number: 25200140.9
(22) Date of filing: 04.09.2025
(51) Int. Cl.: C04B 18/16, C04B 20/02, C04B 40/00

(54) **CEMENTITIOUS POWDER AND METHOD OF GENERATING THEREOF**

(30) Priority: 04.09.2024 EP 24198494
(71) Applicant: Etex Services NV, 1880 Kapelle-op-den-Bos (BE)
(72) Inventor: GIJBELS, Katrijn, 3950 Bocholt (BE); WANTE, Steven, 9240 Zele (BE)
(74) Representative: Etex Services NV - Etex IPSC

(57) **Abstract**

A method of generating a carbonatable cementitious powder with a predefined Ca/Si ratio, comprising the steps of:
- comminuting fiber cement waste material;
- removing organic fibers from said comminuted fiber cement waste material, to obtain a first waste powder,
- comminuting a further waste material with a Ca/Si ratio of at most 0.6 and a SiO2 content of at least 50wt% as identified with XRF, therewith providing a second waste powder, and
- mixing the first and the second waste powder.

## Description

### FIELD OF THE INVENTION

The invention relates to a cementitious powder suitable for carbonation, comprising cured fiber cement material, having a fiber content of at most 2% by weight based on organic carbon content.

The invention relates to a method of generating a cementitious powder, wherein fiber cement waste material is comminuted and wherein organic fibers are removed from said comminuted fiber cement waste material.

The invention further relates to a method of generating a supplementary cementing material, wherein the generated cementitious powder is carbonated.

The invention further relates to resulting powders.

### BACKGROUND OF THE INVENTION

A cementitious powder obtainable from recycling of fiber cement waste material is known from EP4299545A1. The known cementitious powder may be based on fiber cement waste material from autoclaved fiber cement products, and on waste material from air-cured fiber cement products, and hence comprises cured fiber cement material. Fibers are removed after a communition step of the waste material. This results in a fiber content of at most 2% by weight based on organic carbon content. Moreover, the average arithmetic length of the fibers has been reduced to 0.25-0.50 mm, therewith reducing or preventing any flowability issues. It is furthermore disclosed to mix such waste materials from air-cured and autoclave-cured fiber cement, and/or to create mixtures with any further cementitious powder, such as concrete or cement mortar or dried out cement paste.

Recycled cementitious powder is furthermore used as a supplementary cementing material (hereinafter also referred to as SCM). Typically, the recycled powder originates from concrete and is more specifically the recycled concrete paste, in other words the cement material in concrete, without aggregates. A carbonation step is typically performed on such recycled concrete. This carbonation step transforms any calcium-silicate hydrates (also known as CSH) in cured cement into calcium carbonate and an alumino-silica gel. The gel is known to have so-called pozzolanic properties, accelerating strength development in fresh cement.

It appears desirable to convert fiber cement waste material into a supplementary cementing material. Fiber cement material is typically pure material without aggregates, and often a high density of at least 1.2 kg/dm³. However, fiber cement material is produced and used in different versions, including façade materials, slates and corrugated sheets used in roofing, building boards for interior and/or exterior use, and flooring materials. Some of those materials are made in an air-cured process, while others are cured in an autoclave treatment at elevated temperature and high pressure, resulting in hydrothermal conversion of ingredients to crystalline calcium silicate hydrates. Moreover, a characteristic of waste as opposed to fresh material is that the composition may vary as a function of the waste supply. While certain mills facilitate an adequate separation of consecutively processed batches of waste material, such separation is hardly ever perfect in real life, for instance due to mixing of different waste material prior to their processing and/or due to material remaining in the mill after a batch.

Furthermore, in investigations leading to the present invention, it was observed that the effective strength of mortars depended heavily on the type of carbonated fiber cement waste material that it contained. The compressive and flexural strengths of mortars comprising a carbonated waste powder obtained from air-cured fiber cement waste material was less than that of mortars comprising a carbonated waste powder obtained from autoclave-cured fiber cement waste material.

### SUMMARY OF THE INVENTION

It is therefore an object of the invention to provide a cementitious powder and a method of generating a cementitious powder of the type mentioned in the opening paragraph, which can be carbonated and then be used as a supplementary cementing material with consistent quality.

According to a first aspect, the invention resides in a cementitious powder comprising organic fibers in addition to calcium-silicate-hydrates in crystalline and/or amorphous form, which cementitious powder is configured for carbonation and subsequent reuse in cement, wherein said cementitious powder is characterized by a Ca/Si-molar ratio in the range of 0.9-1.5, an Al/Si-molar ratio in the range of at least 0.04 and up to 1, and an organic fiber content of at most 2% by weight based on organic carbon content.

According to a second aspect, the invention resides in a method of generating a carbonatable cementitious powder of the invention, comprising the steps of:
- comminuting fiber cement waste material,
- removing organic fibers from said comminuted fiber cement waste material, to obtain a first waste powder,
- comminuting a further waste material with a Ca/Si ratio of at most 0.6 and a SiO2 content of at least 50wt% as identified with XRF, therewith providing a second waste powder, and
- mixing the first and the second waste powder.

According to a third aspect, the invention relates to a method of generating a supplementary cementing material by means of carbonating the carbonatable cementitious powder of the invention.

According to a fourth aspect, the invention relates to a method of generating a supplementary cementing material having a predefined Ca/Si-ratio comprising the steps of
- comminuting fiber cement waste material,
- removing organic fibers from said comminuted fiber cement waste material, to obtain a first waste powder,
- comminuting a further waste material with a Ca/Si ratio of at most 0.6 and a SiO2 content of at least 50wt% as identified with XRF, therewith providing a second waste powder,
- mixing the first and the second waste powder into a cementitious powder having said predefined Ca/Si-ratio, and
- carbonating said cementitious powder.

According to again further aspect, the invention relates to the cementitious powder and the supplementary cementing material as obtainable in accordance with the methods of invention.

It has been found and understood by the inventors that it is beneficial for use as a supplementary cementing material, that the carbonated material has a relatively low Ca/Si ratio, but not too low. Experimental results have indicated that a lower Ca/Si ratio contributes to compressive strength of the mortars comprising cement and the carbonated material. Such carbonated material with a lower Ca/Si ratio can be very well obtained from autoclave-cured fiber cement waste material. However, it was furthermore observed that a too low Al/Si ratio in combination with a low Ca/Si ratio does not lead to mortars with acceptable compressive strength. A too low Al/Si ratio is for instance a ratio of 0.01-0.02. A low Ca/Si ratio is for instance a Ca/Si ratio of less than 0.50, especially less than 0.45. The Ca/Si ratio is in further preference at least 0.2 and more preferably at least 0.3. A too low Ca/Si ratio implies a structure similar to SiO2, which is not a cementitious material and hence behaves differently in terms of microstructure and carbonation.

According to one preferred embodiment, the said predefined Ca/Si ratio is in the range of 0.9-1.3, preferably 1.0-1.2. More preferably, the said predefined ratio is in the range of 1.05 to 1.15. Such a Ca/Si ratio is deemed optimum for generating a calcium-silicate-hydrate gel. The pozzolanic properties of a carbonated material with such ratio may be less than that of a material with higher Ca/Si-ratio. However, if a material is too strong pozzolanic, there may be a risk of accelerated reaction. Moreover, an SCM with a balanced Ca/Si ratio may be added in larger quantities. This is beneficial, since an SCM serves to reduce the amount of fresh cement and therewith the CO2-output that renders the sustainability of cement problematic. It is preferred for these preferred embodiments with Ca/Si ratio of 1.0-1.2 or 1.05 to 1.15 that the Al/Si ratio is at least 0.04, preferably in the range of 0.05-0.4, and often 0.05-0.10. The Fe/Si ratio is preferably at least 0.01. The organic content is at most 2% by weight based on organic content, preferably at most 1.5% by weight based on organic content, and with arithmetic fiber length and polydispersity as expressed herein below. Such a composition is well flowable notwithstanding the presence of organic fibers and it has a composition such that a carbonated cementitious powder with such composition may replace fresh cement.

Furthermore, good results have been obtained with a cementitious powder in which the Al/Si ratio is enhanced in combination with an adequate Ca/Si ratio. The enhanced Al/Si ratio is particularly in the range of 0.05-0.3, such as 0.05-1.0. The adequate Ca/Si ratio may be in the range of 0.9 to 1.3. Such a cementitious powder may for instance be obtained by mixing a first waste powder from fiber cement waste with a waste powder from a calcium aluminate cement. It is preferred that the calcium aluminate cement would comprise added calcium silicate material.

The mixing of waste powders can be effectively used to provide a cementitious powder with an adequate composition for use as SCM after carbonation. Moreover, it can be used to minimize variations in the composition due to variations in the waste supply. Such variations do not merely relate to the Ca/Si ratio of the fiber cement waste material, but also to the fiber content.

According to the method of the invention, the second waste powder originates from a - further - waste material with a Ca/Si ratio of at most 0.6 and a SiO2 content of at least 50wt% as identified with XRF. In one embodiment, the Ca/Si ratio is even at most 0.5. In another embodiment, the SiO2 content is at least 55wt%, for instance 60wt% or more. In a further embodiment, the Ca/Si ratio is at most 0.5 and the SiO2 content is at least 55wt%. In again a further embodiment, the Ca/Si ratio is at most 0.45, and preferably the SiO2 content is at least 55wt% or even 60% or more. The Al/Si ratio is free and may also be very low. It is deemed useful to use a further waste material with a very low Ca/Si ratio and high Si-content to be mixed into the first waste powder of fiber cement waste. In fact, such a further waste material has a composition, that is complementary to that of air-cured fiber cement material, which has a high Ca/Si ratio and further comprises quite some Al2O3, for instance of at least 4wt%, and quite some Fe2O3. Hence, such a further waste material may be added in small quantities to a first waste powder that comprises a contamination of air-cured fiber cement waste material. It may further be used in larger quantities to lower the Ca/Si ratio of air-cured fiber cement waste material. Clearly autoclave-cured fiber cement material could also be used to lower the Ca/Si ratio of air-cured fiber cement waste material, but this may not be available. Moreover, autoclave-cured fiber cement comprises a comparatively high amount of fibers, whereas the further waste material is preferably free of fibers.

Preferably, the further waste material from which the second waste powder is generated, is a waste material chosen from the group of autoclaved aerated concrete, fly ash and kaolin mining waste. Autoclaved aerated concrete is particularly preferred. These materials all have a low Ca/Si ratio and high contents of SiO2. Autoclaved aerated concrete is moreover have a low Al/Si ratio and a low Fe/Si ratio. As such, it is by itself not suitable as supplementary cementing material.

According to again a further embodiment, the fiber cement waste material originates from fiber cement products manufactured in accordance with the Hatschek and/or the flow-on process, and especially in accordance with the Hatschek process. The gist of these processes is that a plate is constructed from a series of films that are each formed from small particles in a slurry. Dewatering of the film occurs in a series of steps, such as during transport of an initially formed film over a belt and upon transfer of the film to an accumulator roll. The result is a stacked laminate of a plurality of monolayers (or films), each monolayer typically having a thickness of 0.1 to 0.9 mm. As a consequence, a plate is formed with a - substantially - uniform distribution of fibers, cement and any further materials. The plates are therewith strong and stable and suitable for exterior use with a lifetime of decades. Waste material hereof will have this uniform composition too and hence be perfect for carbonation purposes. Moreover, the granular structure that will remain through the processing that comprises comminuting and carbonating. This likely constitutes a good basis for developing strength afterwards, when in use as a supplementary cementing material.

By further preference, waste material is obtained from fiber cement products with a density of at least 1.2 kg/dm3, more preferably at least 1.4 kg/dm3, or even 1.5 kg/dm3. Such products are known in the art as medium-density and high-density fiber cement products. Reference is made here to the density of the plate or sheet as such, as specified by manufacturers thereof in accordance with EN12467. The waste material thereof normally has the same density. Beyond being well-characterized, these products typically do not include major additives, such as low-density additives to obtain a low-density product. Hence, the effectively available raw material for generating the desired carbonated cementitious powder is a medium-density or high-density fiber cement product. A higher density of at least 1.5 kg/dm3 or higher is preferably obtained by compressing the green sheet resulting from the Hatschek or flow-on process. For high density products, the compression force is in the range of 20 MPa to 30 MPa.

Fiber cement waste material treated to become first waste powder may be air-cured fiber cement, autoclave-cured fiber cement and/or a mixture thereof. The mixture may be intentional or unintentional, thus effectively as a contamination due to waste material handling and/or processing. Contamination with another material, such as concrete, or limestone is not excluded. The level of contamination may vary. As known to the skilled person, air-cured or autoclave-cured fiber cement differ in the curing treatment and with respect to the composition. In case of autoclave-curing, a pretreatment may be performed, which is an air-curing treatment. This is done so as to generate certain cement phases that react beneficially during the autoclave curing to obtain those crystalline calcium silicate hydrates that particularly contribute to strength. In the context of this invention, autoclave-curing is a method of steam curing of a material comprising both a source calcium oxide and a source of silicon oxide, wherein the product is put to steam at a temperature above 100°C and at a pressure well above atmospheric pressure, such as at least 5 bar, for a predetermined duration. Preferably, the temperature is above 150 °C and the pressure is at least 6 bars or even at least 7 bars. Under such conditions, calcium oxide and silica provided as raw materials will react to form calcium silicates, that might be present either in amorphous form, typically referred to as a calcium silicate hydrate (CSH) gel, or in the form of crystalline calcium silicate. An important crystalline phase is tobermorite, which is understood to contribute to the strength of the resulting material. Alternative crystalline phases of calcium silicate include xonotlite and wollastonite.

The organic fibers that are present in autoclave-cured fiber cement are usually cellulose fibers which serve as processing fibers and/or reinforcing fibers. The cellulose fiber preferably has a fineness as defined by Schopper-Riegler (SR) value of 10 to 40, preferably 15 to 30. The content of organic fibers is typically 7-12wt% based on dry weight for an autoclave-cured fiber cement material. The organic fibers that are present in an air-cured fiber cement are typically both cellulose fibers as processing fibers and synthetic fibers as reinforcing fibers. Inorganic fibers could be used instead of synthetic fibers. Examples of synthetic fibers are polyvinyl alcohol, polypropylene, polyethylene, polyacrylonitrile and the like as known to the skilled person. The amount of fibers in air-cured fiber cement is typically from 1 to 7% by weight based on dry content, preferably 2 to 6 wt%. The amounts and types of fibers recited herein are typical for a Hatschek process, as known to the person skilled in the art, but variations and alternatives are not excluded.

In again a further embodiment, the cementitious powder that is provided for carbonation, has a particle size distribution such that the d90 is less than 150 µm, preferably less than 100 µm, and wherein the d50 is preferably in the range of 10-60 µm, preferably 20-50 µm. The d50 is also known in the art as the median. Such as particle size distribution has the advantage that the powder has a sufficient surface area for effective carbonation. It is moreover feasible to obtain such particle size distribution in a limited number of comminution and separation steps. Preferably, the waste powders that are mixed to obtain the cementitious powder have a corresponding particle size distribution. This is deemed advantageous to facilitate mixing in order to achieve a uniform distribution. Preferably, the corresponding distribution is the same distribution, and more preferably this distribution of the waste powders conforms to the limits and ranges specified for the cementitious powder. However, in the context of the present invention, corresponding is intended to mean a minor variation, for instance any variation in which the median particle size (d50) of the first waste powder is in the range of 50-200% of the median particle size (d50) of the second waste powder. More preferably the ranges are from 70-140%. The particle size distribution is herein determined in accordance with laser diffraction as known.

According to the invention, the method comprises the step of removing at least part of the organic fibers from said fiber cement waste. The removal of organic fibers facilitates that the resulting cementitious powder has a better flowability and thus processability. Moreover, fibers may render the cementitious powder less uniform, i.e. to vary more in dependence of the waste material. Preferably, the resulting amount of organic fibers is in the range of up to 6% by weight, for instance up to 5% by weight, based on the total dry weight of the composition of the first waste powder, and preferably even less in the cementitious powder. In case of fiber removal from air-cured fiber cement, the residual fiber content is for instance from 2 to 4 % by weight. In case of autoclave-cured fiber cement, the residual fiber content may be higher, from 3 to 5% by weight. These percentages are clearly dependent on the initial fiber content.

In one advantageous embodiment, the organic fibers in the cementitious powder have an arithmetic average length (L(n)) in the range of 0.25 mm to 0.50 mm, preferably in the range of 0.30 mm to 0.45 mm. More preferably, said organic fibers have a polydispersity in the range of 1.05-1.25, preferably 1.10-1.20. The arithmetic average length is defined as specified in more detail in example 13 hereinbelow. Such a fiber length is advantageous in that the cementitious powder is well dispersible and does not hamper flowability. Such fiber length may be achieved with the method for comminution and fiber removal as specified hereinafter.

Removal of fibers from waste powder is known per se, but is especially cumbersome for fiber cement waste with a density of at least 1.2 kg/dm3, such as waste material from autoclave-cured fiber cement. Such organic fibers are typically in use as reinforcing fibers, and the fibers may be selected and/or treated prior to the manufacture of the fiber cement product (or other product) so as to stimulate the fixation of the matrix therein. Due to this intricate distribution and often small fiber diameters, the removal from the matrix is difficult. In the light thereof, in a preferred method of removing at least part of the organic fibers from fiber cement waste, the method comprises the steps of comminuting grinding the autoclave-cured fiber cement waste, following by air-classification and sieving off the fibers. This method has been found effectively in order to remove the fibers, which are embedded in the fiber cement matrix and often also adhered thereof. The air-classification herein occurs in a closed circuit, such that classified material either goes back to communication or proceeds to the sieving step. The comminution step may be performed in several stages, such as a rough size reduction step to achieve pieces of a few millimeters to centimeters, followed by a further comminution step. More preferably, such further comminution step is a grinding step is for instance embodied by making use of a ball mill or a roller mill or a pendulum mill. Very good results have been achieved by using a vertical roller mill, in which the air-classifier is incorporated. The ground particles will herein be moved upwards to the air-classifier. It is deemed that this moving upwards within a single reactor is beneficial to enable removal of the fibers from the cement. It is especially preferred to ensure that the reactor is heated, for instance to a temperature of at least 40°C, or even at least 60°C. Bringing the ground particles in contact with heated air leads to drying, which is again deemed beneficial for an adequate separation. Upstream of grinding, the waste material may be pretreated in several stages, such as a rough size reduction step to achieve pieces of a few millimeters to centimeters, followed by a further comminution step. Also removal of (macroscopic) contaminants such as plastic parts may be performed, as known in waste recycling.

In a preferred embodiment, as least one of the first and the second waste powder is provided into a storage container, such as a silo, prior to the mixing step. It is deemed preferable that the first and the second waste powder may be put into individual storage containers prior to mixing. This is however not deemed essential. In case of intermediate storage of the waste powders, the mixing step may be performed at a convenient moment in time. If carbonation occurs at the same location as the generation of the waste powders, this may be at any time prior to carbonation, for instance immediately after the generation of at least one of the waste powders. If carbonation occurs at a different location than the generation of the waste powders, the mixing step may be performed upon preparing a transport for the first location - of the waste powder generation - to the second location where the carbonation step will be performed. Such second location may be performed under the control of a different entity, i.e. after selling the cementitious powder. The mixing ratio of the first and second waste powder may for instance be controlled by means of the outflow rate of the storage container(s) for the waste powders. Rather than using storage containers, it is not excluded that one facility for the generation of waste powder comprises several installations for comminution, such that the first and the second waste powder could be generated simultaneously and optionally continuously.

While it is assumed in the foregoing for sake of simplicity of expression, that the first waste powder may be based on a mixture of air-cured fiber cement material and autoclave-cured fiber cement material, it is not excluded that the first waste powder is generated by mixing two or more waste powders obtained from different fiber cement materials, which have been processed separately and optionally been stored separately.

According to the invention, it is deemed highly preferable to perform mixing subsequent to generation of the waste powders. The reason is that the steps of comminuting the fiber cement waste material and removing organic fibers thereof may have an impact on the distribution of the material. Furthermore, the different materials may need different settings to obtain a powder with a corresponding size distribution. Moreover, it may be difficult to control the composition without mixing. However, it is not excluded that part of the further waste material would be added to the fiber cement waste material prior to the steps of comminution and fiber removal.

While the present application refers merely to a first and a second waste powder that are mixed, it is not excluded that a further waste powder would be mixed into the mixture. Rather than a first waste powder, any further additive may be added into the cementitious powder, before, during or after a mixing step. Such additive may be any additive for hydrophobization, a biocide, a dispersing agent, a flowing agent, a coloring agent, an agent for accelerating or stimulating carbonation and more.

While the present application refers to a mixing step, it is not excluded that the first and second waste powder are mixed together in more than one step. It is furthermore not excluded, that a further fiber removal treatment may be performed upon mixing of the first waste powder and the second waste powder.

While it has been indicated that the first waste powder may comprise a mixture of autoclave-cured fiber cement material and air-cured fiber cement material, or one of those with a contamination of the other, it is not excluded that the second waste powder comprises a contamination with any other material, such as a fiber cement waste material.

A variety of measurement techniques may be applied to determine a composition of the first and second waste powder. First of all, off-line measurement techniques may be used by taking samples of such waste powder and analyzing those in a laboratory and/or with dedicated analytical equipment, such as XRF (X-Ray fluorescence), TGA (thermogravimetric analysis). Furthermore, use can be made of the fiber content as an indicator for the overall composition. This is based on the fact that the concentration and types of fibers are known and different for air-cured fiber cement products, autoclave-cured fiber cement products and further waste materials. Analysis of the fiber content of the waste powders may for instance be performed during or in relation to any fiber removal treatment, for instance a sieving step.

In a further embodiment, the cementitious powder is wetted prior to and/or during the carbonation treatment. Wetting preferably occurs to a mass ratio of water over binder (w/b) of at least 0.20, and preferably at most 0.4, and more preferably in the range of 0.25-0.35, when measured at the start of the carbonation step. The presence of sufficient water is understood to contribute to effective carbonation, i.e. the formation of CO32- from CO2 and H2O via H2CO3 and/or HCO3-, as known per se.

The carbonation step may itself be carried out in various ways. In one implementation, the carbonation is performed in a plurality of cycles, wherein prior to each cycle the cementitious powder is de-agglomerized and wetted. Alternatively, a specific reactor may be provided, wherein the cementitious powder is wetted and/or de-agglomerized during the carbonation, for instance by means of an effective mixing device. Zajac et al provide one implementation in Cement and Concrete Research, 130 (2020), 105990.

The weight percentages of minerals in the cementitious powder as determined by means of XRF and are defined for any waste powder prior to carbonation. Ca/Si ratio is known as the molar (atomic) calcium to silicon ratio. Al/Si ratio is known as the molar (atomic) aluminium to silicon ratio. Fe/Si is known as the molar (atomic) iron to silicon ratio. Calculations and ranges are based on the weight percentages in the waste powder prior to carbonation. Molar masses used for calculation of the ratios are those of CaO, SiO2, Al2O3 and Fe2O3. Weight percentages are expressed as wt%, wt.% or % by weight, but all mean the same.

It is observed for clarity that any embodiment or preferred implementation discussed hereinabove or hereinafter in relation to one aspect of the invention applies equally to any other aspect of the invention.

### BRIEF INTRODUCTION OF THE FIGURES

These and other aspects of the methods, the cementitious powder and the supplementary cementing material of the invention will be further elucidated with reference to examples and to following Figures, wherein:
The method and the material of the invention will be further elucidated with reference to figures, wherein:
Fig. 1(a) and (b) show DTG graphs for the carbonated and uncarbonated material; Fig 1(a) relates to autoclave-cured material, fig 1(b) relates to air-cured material.
Fig. 2(a) and (b) show FTIR graphs for the carbonated and uncarbonated material; Fig. 2(a) relates to autoclave-cured material and Fig. 2(b) to air-cured material.

### EXAMPLES

### Example 1

Test samples 1 and 2 were prepared with compositions as shown in Table 1. A fiber cement sheet was prepared therewith using the Hatschek process. Composition 1 was cured by subjecting the fiber cement sheet to precuring at atmospheric conditions, followed by autoclave curing at 7 bar for 12 hours. Composition 2 was pre-cured during 1 night in a climatized room at around 50°C and thereafter cured in ambient conditions during 3 weeks. The samples had a density of around 1.4 g/cm³. They represented waste from a production facility.

**Table 1 - composition of samples, all values as weight% relative to dry weight of composition**

| Composition | 1 | 2 |
|---|---|---|
| Portland cement type CEM I 42.5 R | 41 | 72 |
| Kaolin | 4 | - |
| Quartz | 47 | - |
| Cellulose fibers | 8 | 3 |
| Polyvinyl alcohol fiber | - | 2 |
| Limestone | - | 17 |
| Amorphous silica | - | 6 |

The cured sheets were cut in smaller pieces, after which the pieces were milled with a cutting mill (Retsch SM300 with a 500 µm sieve) to obtain a powdered material. This powdered material was dried in a laboratory oven at 105°C for 24 hours, and subsequently milled with a disk mill of type Retsch RS200 during 2 minutes. Finally, the powdered material was sieved over a 100 µm sieve. The residual waste from this process was 25% by weight.

X-ray fluorescence (XRF) was applied to identify the elemental composition of the samples. More generally, the amount of CaO in autoclave-cured samples is in the range of 20-30 wt%, and the amount of SiO2 is in the range of 45-65 wt%, such as 50-60wt%.

**Table 2 - Elemental composition prior to carbonation measured at 1000°C by X-Ray diffraction (XRF)**

| Composition | 1 | 2 |
|---|---|---|
| Al₂O₃ | 3 | 3 |
| CaO | 24 | 52 |
| SiO₂ | 55 | 19 |
| Other metal oxides (Na, K, Fe, Mg, Mn, ..) | 3 | 5 |
| SO3 and P2O5 | 1 | 2 |
| Loss on Ignition (LOI) | 14 | 19 |

### Example 2

Part of the waste fibre cement powder (at least 500 gram per test sample) produced in Example 1 was put aside to be tested as non-carbonated material. Another part of the waste fibre cement powder (at least 500 gram per test sample) from Example 1 was carbonated. Thereto, the dried and milled powders were spread out in aluminium dishes (about 250 grams per dish). The weight of the dishes and the dry powders were measured, after which the dry powders were moistened with water under a mass ratio of water over dry powder of 0.35 was achieved. The moisture was applied by spraying. Thereafter, the weight of the powders was measured again. The powders were then subjected to pre-hydration by placing them in a chamber at a temperature of 60°C and a relative humidity RH of 90% during 72 hours. The powders agglomerated during this pre-hydration process. Hence, they were disturbed and de-agglomerated with a spatula, after which the powders were wetted again to a mass ratio of water over dry powder of 0.35. Weight was measured before and after wetting. The powders thereafter were subjected to carbonation in five consecutive cycles. Each carbonation cycle had a duration of 24 hours and was performed in a carbonation chamber at a temperature of 60°C, a relative humidity RH of 90% and a constant CO₂ inflow of 1.5 l/min to achieve a CO₂ concentration of 18% by volume or higher. Between each of the cycles, the agglomerated powders were disturbed and de-agglomerated with a spatula, and subsequently wetted until a mass ratio of water over dry powder of approximately 0.35. The samples were weighted before and after wetting. The powders were dried at 105°C for 24 hours after the last carbonation cycle, and the weight of the powders was measured before and after drying.

### Example 3 - determination of CO₂-content

Generally, the CO₂-content in a sample can be derived from the total inorganic content (TIC), by multiplying the TIC with the ratio of molar mass of CO₂ to C (i.e. 3.667). The TIC can be found by measuring the total carbon content (TC) and the total organic carbon content (TOC) in a sample. The TIC is the difference of TC and TOC. As specified for instance in EN13639:2017, TOC and TC can be determined by oxidizing a sample at a temperature of 1300°C. In order to measure the TOC, the matter contributing to TIC needs to be removed first. This is done by treatment of a dried sample with strong acid, such as phosphoric acid (for instance in a 1:1 ratio). This determination of CO₂-content was performed for the cementitious powders 1 and 2 obtained in accordance with Example 2. Use in made of a carbon/sulfur analyzer EMIA-320V from Horiba to quantify TC and TOC, enabling calculation of TIC. The carbonation degree is determined as the CO2 degree relative to the theoretically maximum CO₂ degree as determined from XRF. The results are shown in Table 3

**Table 3 - CO2 content and carbonation degree (measurement in mass% compared to total dry weight)**

| Composition | Before /after carbonation | TIC | CO2 content | Increase | Max CO2 degree | Carbonation degree |
|---|---|---|---|---|---|---|
| 1 | Before | 0.6 | 2.2 | | 16.5 | 13% |
| 1 | After | 3.6 | 13.2 | 11.0 | 16.5 | 80% |
| 2 | Before | 2.6 | 9.4 | | 29.7 | 32% |
| 2 | After | 6.4 | 23.4 | 14.0 | 29.7 | 79% |

Table 3 shows that the TIC and CO2-degree in composition 2 was much higher before carbonation than in composition 1. This is due to the presence of limestone in the product composition, see Table 1. The increase in CO2 content is higher for composition 2 than for composition 1. The degree of carbonation is about 80% indicating that the laboratory method of carbonation in a plurality of cycles preceded by wetting is sufficiently good, though not perfect.

### Example 4 - characterization of the carbonated material by DTG

DTG (Difference Thermogravimetry) measures a ratio of Dm (weight loss or weight increase) at heating/cooling/isotherm, interpretation by Dm over T or time (-dm/dt). The DTG curve is the first derivative of the Thermogravimetry. Thereto, samples were heated from room temperature to 1000°C under N₂ atmosphere with a heating rate of 10 °C/minute.

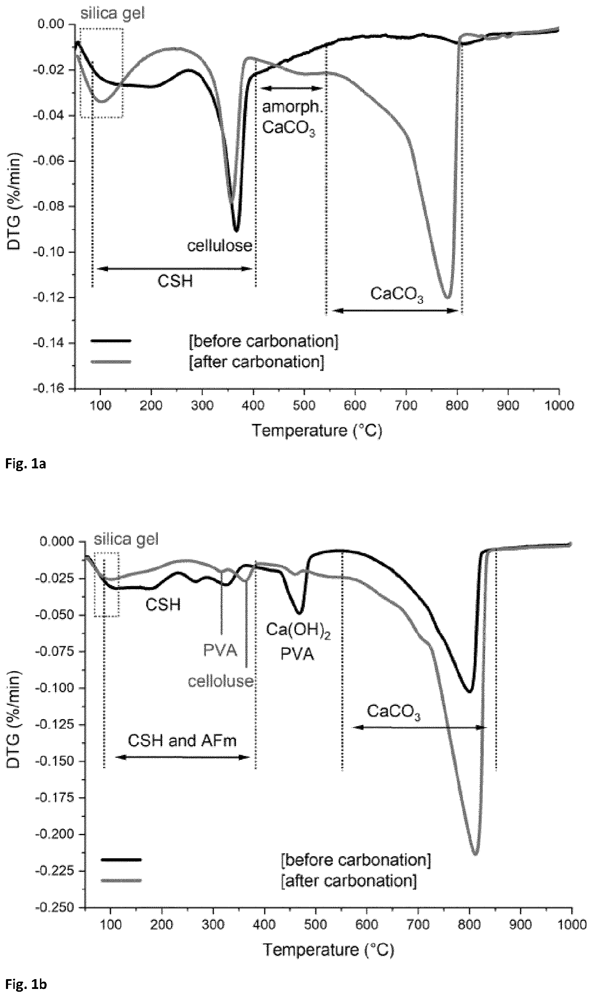

Results are shown in Fig. 1a and Fig 1b for compositions 1 and 2 respectively. Each figures includes a graph for the uncarbonated sample (solid line) and carbonated sample (dotted line). These graphs allow several observations.

First, a major peak is seen in the carbonated samples around 800°C, which is absent in the uncarbonated sample of composition 1 and smaller in the uncarbonated sample of composition 2. This peak originates from the CaCO₃, particularly in the form of well crystallized calcite.

Secondly, in Fig. 1a, it is apparent that a second peak is somewhat diminished and furthermore sharper. This peak originates from the cellulose in composition 1 and can be attributed to pyrolysis of fibers. In Fig. 1b, a peak attributed to a complex of polyvinyl alcohol (PVA) fiber and Ca(OH)₂ disappeared during carbonation and was replaced by a minor peak for PVA only. All this indicates that the sharpening of the cellulose peak in Fig. 1a (as a consequence of carbonation) may be due thereto, that the fibers in the carbonated sample are less or no longer adhesively bound to the inorganic matrix.

Thirdly, the graph of the carbonated sample in Fig. 1a includes a broad peak in the range of up to 200°C, which is absent in the uncarbonated sample and which is less pronounced in the carbonated sample of Fig. 1b. This broad peak is attributed to the presence of silica gel.

### Example 5 - characterization of carbonated samples by FTIR

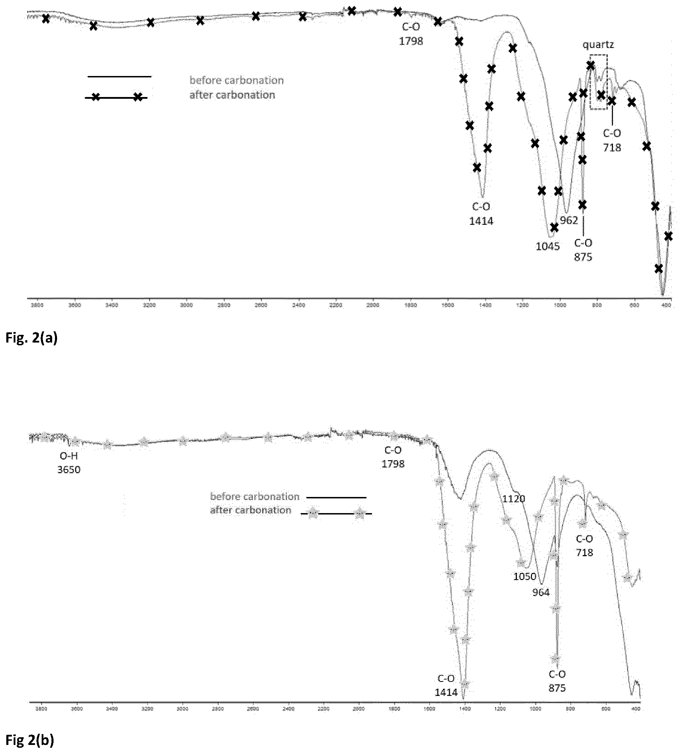

Further characterization was performed using Fourier Transform Infrared (FTIR) measurements, in order to understand what phases of silica were present in the carbonated samples. According to literature, a peak at 960 cm⁻¹ is associated with the vibration of Si-O bonds in the calcium-silicate hydrate gel (CSH). Fig. 2(a) show results for uncarbonated and carbonated samples of composition 1. Fig. 2(b) shows results for uncarbonated and carbonated samples of composition 2.

The graphs for the uncarbonated samples are quite different, but both include a peak around 960 cm⁻¹ that can be attributed to the CSH gel. This peak has shifted and is increased in size in the carbonated samples. It furthermore is broader. This indicates a change in silicon-oxide bonding type. The peak at 960 cm⁻¹ is representative for Q1-configuration, wherein merely one oxygen atom bonded to a silicon atom is also bonded to a further silicon atom. The peak around 1045 cm⁻¹ is representative of a Q2-configuration, wherein two Si-O-Si bonds are present for a single Si-O-unit rather than one. The peak has a shoulder around 1160 cm⁻¹, that seems representative for Q3, i.e. even higher degree of polymerization of the Si-O unit. There is some variation between the graphs of the carbonated samples in Fig. 2(a) and Fig. 2(b). This may be due to the amounts of aluminum replacement of silicon in the Q2 and Q3 configurations.

It is furthermore observed that Fig 2(a) shows a peak representative for SiO2 in the carbonated and non-carbonated sample. That implies that non all quartz has been converted into the aluminate-silicate gel. In addition, both graphs include peaks at 718 cm⁻¹ and 1414 cm⁻¹ that can be attributed to calcium carbonate in crystalline form.

According to Zajac et al, Cement and Concrete Research 134 (2020), 106090, the carbonated material would contain calcite (47%), alumina-silica phase (50%) and a minor quantity of other (3%). In the present example, the carbonated autoclave-cured material contains 8% of cellulose fibers, and some residual quartz that is not converted. The overall amounts thereto are roughly 7% fiber, 13% residual quartz, 42% amorphous alumina-silica phase and 38% calcite. The mutual ratio of the alumina-silica phase and the calcite phase is about 1.10 in the present case and 1.06 according to Zajac et al.

It is noted therein that the present material originates from autoclave-cured material, which comprises relatively more SiO2 than the Portland cement used in Zajac et al. This is also apparent from the composition of the alumina-silica phase. According to Zajac et al, the phase comprises 67% SiO2, 19% Al2O3 and 14% other components, including 6% alkali metal oxides (Na2O, K2O), 3% earth alkali metals (MgO, CaO), 2% Fe2O3 and 3% SO3. In the present situation, the amount of SiO2 is estimated 85%, the Al2O3 is about 7%, and the others are about 8%, including 3% Fe. So, more generally speaking the amount of SiO2 is at least 75% by weight, or even at least 80% by weight, and the amount of alumina is less, up to 12%. Furthermore, the amount of alkali metal oxides is less. This leads to an alumina-silica phase, that is richer in silica, and hence would be characterized by a stronger pozzolanic behaviour.

### Example 6 - BET surface area

BET specific surface areas were determined by nitrogen gas adsorption (porosimetry) based on the BET isotherm. Use was made of a Quantachrome Apparatus (Autosorb iQ Station 1) for automated gas sorption.

**Table 4 - specific surface area of samples according to BET isotherm**

| Composition | Before/after carbonation | Specific surface area (m²/g) |
|---|---|---|
| 1 | Before | 33 |
| 1 | After | 54 |
| 2 | Before | 14 |
| 2 | After | 43 |

It can be seen in this table that the specific surface areas strongly increased as an effect of carbonation. The resulting value is very high, since typical BET specific surface areas for limestone and silica fume (amorphous silica) are 1.3 m²/g and 20 m²/g. The BET value before carbonation is attributed to the presence of amorphous calcium-silicate hydrate (CSH) gel. The inventors believe that the further increase of the BET value induced by carbonation is due to the decalcification of the CSH-gel, the inclusion of alumina in this gel to obtain an alumina-silica gel. The high BET value is deemed representative for a high pozzolanic character of the material, that may contribute to a quick reaction with cement.

### Example 7 - mortar sample preparation

Several binders for mortars were prepared by mixing the uncarbonated and carbonated samples with Portland cement CEM I, 42.5 R, in accordance with Table 5. For the preparation of three mortar samples per formulation, 450 gram binder, 1350 gram standard sand and 225 gram tap water are used. The binder includes herein both the Portland cement CEM I and the carbonated material, in the ratio set out in Table 5. Hence, for sample 13, the effective amount 360 gram CEM-I, 90 gram carbonated material, 1350 gram sand and 225 gram water.

**Table 5 - prepared mortar formulations; * comparative examples**

| | CEM-I | Composition 1 | | Composition 2 | |
|---|---|---|---|---|---|
| | | Uncarbonated | Carbonated | Uncarbonated | carbonated |
| Ref * | 100 | 0 | 0 | 0 | 0 |
| 11 | 95 | 0 | 5 | 0 | 0 |
| 12 | 90 | 0 | 10 | 0 | 0 |
| 13 | 80 | 0 | 20 | 0 | 0 |
| 14 * | 95 | 5 | 0 | 0 | 0 |
| 15 * | 90 | 10 | 0 | 0 | 0 |
| 16 * | 80 | 20 | 0 | 0 | 0 |
| 21 | 95 | 0 | 0 | 0 | 5 |
| 22 | 90 | 0 | 0 | 0 | 10 |
| 23 | 80 | 0 | 0 | 0 | 20 |
| 24 * | 95 | 0 | 0 | 5 | 0 |
| 25 * | 90 | 0 | 0 | 10 | 0 |
| 26 * | 80 | 0 | 0 | 20 | 0 |

At the age of 3 days, 7 days, 14 days and 28 days, three mortars (4 cm x 4 cm x 16 cm) per formulation are tested for compressive strength and for flexural strength. The strength data (expressed in MPa = kg/m2.s) of each of the samples was measured by making use of a UTS/INSTRON apparatus (type 3345, cel = 5000N).

### Example 8 - compressive strength development of mortar formulations comprising composition 1 (waste fibre cement powder from autoclave cured material)

Table 6, 7 and 8 show the resulting data for the reference and the mortar formulations 11-16 for the compressive strength. All formulations include waste fibre cement powder from autoclave-cured material. Table 6 provides the absolute strength values. Table 7 shows the increase or decrease in strength relative to the reference. Table 8 shows the difference in strength between the carbonated and uncarbonated samples.

**Table 6 - compressive strength (MPa)**

| | Compressive Strength of Mortar formulations (MPa) | | | | | | |
|---|---|---|---|---|---|---|---|
| | | Carbonated | | | uncarbonated | | |
| Age | Ref | 11 (5%) | 12 (10%) | 13 (20%) | 14 (5%) | 15 (10%) | 16 (20%) |
| 3 days | 28 | 28.5 | 28.4 | 23.7 | 26.9 | 24.9 | 20.9 |
| 7 days | 39.1 | 42.6 | 40.1 | 33.6 | 36.3 | 35.6 | 28.0 |
| 14 days | 48.4 | 50.1 | 49.8 | 42.6 | 45.8 | 42.5 | 34.1 |
| 28 days | 54.3 | 54.2 | 52.8 | 49.3 | 49.6 | 47.8 | 37.4 |

**Table 7 - compressive strength increase or decrease relative to reference (in %)**

| | Compressive Strength of Mortar formulations (MPa) | | | | | | |
|---|---|---|---|---|---|---|---|
| | | Carbonated | | | uncarbonated | | |
| Age | Ref | 11 (5%) | 12 (10%) | 13 (20%) | 14 (5%) | 15 (10%) | 16 (20%) |
| 3 days | - | + 1.7 | + 1.4 | - 15.5 | - 4.7 | - 11.1 | - 25.5 |
| 7 days | - | + 8.8 | + 2.5 | - 14.3 | - 7.3 | - 9.1 | - 28.5 |
| 14 days | - | + 3.5 | + 2.8 | - 12.1 | - 5.4 | - 12.3 | - 29.6 |
| 28 days | - | + 1.4 | - 1.1 | -7.7 | - 7.1 | - 10.6 | - 29.9 |

**Table 8 - compressive strength difference between carbonated and uncarbonated samples.**

| | Compressive Strength of Mortar formulations (MPa) | | |
|---|---|---|---|
| Age | 5% addition | 10% addition | 20% addition |
| 3 days | + 6.7 % | + 14.0 % | + 13.4 % |
| 7 days | + 17.4 % | + 12.8 % | + 20.0 % |
| 14 days | + 9.4 % | + 17.2 % | + 24.8 % |
| 28 days | + 9.1 % | + 10.6 % | + 31.7 % |

The percentages are calculated as the difference in compressive strength (in MPa) between the corresponding carbonated and uncarbonated sample, divided by the compressive strength value for the uncarbonated sample.

These tables demonstrate that the compressive strength of the mortars is improved significantly due to the carbonation. There is furthermore an improvement of the compressive strength for 5% and 10% addition of carbonated samples. The increase is most significant for the 5% addition after 7 days. After 28 days, the compressive strength of the formulations with 5 and 10% addition of carbonated material is nearly the same as that of the reference. This seems to imply that the carbonated material accelerates strength increase, without leading to an overall added strength.

The data for the 20% addition of carbonated material is highly interesting. In absolute terms, the compressive strength is lower than those of the reference. However, as is most easily visible in Table 7, it appears that the strength development is rather different than for the samples of 5% and 10%. Whereas the strength development of those samples is quite similar to that of the reference, but slightly quicker, the strength development of the sample with 20% addition is slower. After 28 days, the compressive strength is still lower than that of the reference, but the difference is decreased. It may be expected that the difference would be even smaller after 49 or 90 days. Furthermore, the difference in strength in comparison to the uncarbonated sample with 20% addition, only increases with the age of the mortar. This behaviour is different from the 5% and 10% additions. An explanation might be that at low addition percentages, the carbonated material does not have a major impact on the hardening of the cement. At higher addition percentages, however, the microstructure of the resulting mortar might change. A further explanation may be that the water-demand of the 20% addition is higher, and hence required more time and/or more water.

It is observed in this respect, that the binder with 5% carbonated material effectively contains about 0.36% of cellulose fibers. This fiber content is about 0.72% for the 10% addition and 1.44% for the 20% addition. This fiber content is quite high for the 20% addition, even when taking account that the fiber content in the mortar is further diluted due to the addition of sand. Still, the fiber content may have had a negative impact on the strength levels for the 20% addition.

The addition of uncarbonated material to the mortar leads to a decrease in strength. As it appears from Table 7, the relative decrease does not increase or decrease over time, and is further roughly linearly dependent on the added amount. Thus, the addition of uncarbonated material seems to be equivalent to the addition of filler material.

### Example 9 - compressive strength development for samples comprising waste fibre cement powder from air-cured fiber cement

Table 9, 10 and 11 show the resulting data for the reference and the mortar formulations 11-16 for the compressive strength. All tables include data for samples comprising waste fibre cement powder from air-cured material. Table 9 provides the absolute strength values. Table 10 shows the increase or decrease in strength relative to the reference. Table 11 shows the difference in strength between the carbonated and uncarbonated samples.

**Table 9 - compressive strength (MPa)**

| | Compressive Strength of Mortar formulations (MPa) | | | | | | |
|---|---|---|---|---|---|---|---|
| | | Carbonated | | | uncarbonated | | |
| Age | Ref | 21 (5%) | 22 (10%) | 23 (20%) | 24 (5%) | 25 (10%) | 26 (20%) |
| 3 days | 28 | 27.5 | 24.1 | 20.7 | 23.8 | 22.0 | 19.4 |
| 7 days | 39.1 | 36.5 | 35.6 | 30.7 | 33.5 | 28.1 | 25.4 |
| 14 days | 48.4 | 44.6 | 41.5 | 36.6 | 43.0 | 36.2 | 32.0 |
| 28 days | 54.3 | 49.7 | 45.7 | 37.2 | 46.7 | 42.2 | 34.4 |

**Table 10 - compressive strength increase or decrease relative to reference (in %)**

| | Compressive Strength of Mortar formulations (MPa) | | | | | | |
|---|---|---|---|---|---|---|---|
| | | Carbonated | | | uncarbonated | | |
| Age | Ref | 21 (5%) | 22 (10%) | 23 (20%) | 24 (5%) | 25 (10%) | 26 (20%) |
| 3 days | - | - 2.0 | - 13.9 | - 26.2 | - 15.1 | - 21.6 | - 30.8 |
| 7 days | - | - 6.8 | - 9.0 | - 21.5 | - 14.4 | - 28.3 | - 35.2 |
| 14 days | - | - 8.0 | - 14.4 | - 24.4 | - 11.3 | - 25.3 | - 33.9 |
| 28 days | - | - 7.0 | - 14.4 | - 30.3 | - 12.6 | - 21.1 | - 35.6 |

**Table 11 - compressive strength difference between carbonated and uncarbonated samples.**

| | Compressive Strength of Mortar formulations (MPa) | | |
|---|---|---|---|
| Age | 5% addition | 10% addition | 20% addition |
| 3 days | + 15.5 % | + 9.7 % | + 6.6 % |
| 7 days | + 8.9 % | + 26.9 % | + 21.2 % |
| 14 days | + 3.8 % | + 14.6 % | + 14.5 % |
| 28 days | + 6.4 % | + 8.5 % | + 8.0 % |

The percentages are calculated as the difference in compressive strength (in MPa) between the corresponding carbonated and uncarbonated sample, divided by the compressive strength value for the uncarbonated sample.

The compressive strength levels of the samples including waste fibre cement powder from air-cured material are consistently lower than that of the reference. As can be most easily seen from Table 10, the decrease in strength increases with the amount of added material, both for the carbonated and the uncarbonated material. As can be most easily seen from Table 11, the addition of carbonated waste fibre cement powder from air-cured material provides gives better result than the addition of uncarbonated material. The difference seems to biggest after 7 days for the 10% and 20% addition, after which it decreases again. For the 5% addition, the same pattern is visible, except that the biggest improvement in strength is seen after 3 days. When comparing the values of Table 10 and Table 7, it appears that the decrease in strength is even bigger for the addition of uncarbonated waste fibre cement powder from air-cured material than for uncarbonated waste fibre cement powder from autoclave-cured material. The abnormal pattern found for the addition of 20% carbonated waste fibre cement powder from autoclave-cured material is not recognized for the addition of 20% carbonated waste fibre cement powder from air-cured material. Apparently, in the samples comprising waste fibre cement powder from air-cured material, the large content of CaCO3 gives rise to a filler-like behaviour. In fact, as can be seen from Table 10, the loss in compressive strength after 28 days is quite linearly dependent on the amount of addition of carbonated material.

### Example 10 - flexural strength development

**Table 10 - flexural strength increase or decrease relative to reference (in %), value of reference in MPa**

| | Flexural Strength of Mortar formulations comprising waste fibre cement powder from autoclaved material (MPa) | | | | | | |
|---|---|---|---|---|---|---|---|
| | | Carbonated | | | Uncarbonated | | |
| Age | Ref | 11 (5%) | 12 (10%) | 13 (20%) | 14 (5%) | 15 (10%) | 16 (20%) |
| 3 days | 6.2 | + 3 % | -4% | -17 % | - 10 % | - 16% | - 31 % |
| 7 days | 8.1 | -1% | -4% | -15% | - 13 % | -15% | - 33 % |
| 28 days | 9.0 | - 3% | 0 % | - 7 % | -11 % | - 16% | - 29% |

**Table 10 - flexural strength increase or decrease relative to reference (in %), value of reference in MPa**

| | Flexural Strength of Mortar formulations comprising waste fibre cement powder from air-cured material (MPa) | | | | | | |
|---|---|---|---|---|---|---|---|
| | | Carbonated | | | Uncarbonated | | |
| Age | Ref | 21 (5%) | 22 (10%) | 23 (20%) | 24 (5%) | 25 (10%) | 26 (20%) |
| 3 days | 6.2 | -4% | - 10 % | - 22 % | - 14 % | - 19 % | -27% |
| 7 days | 8.1 | - 9 % | - 16 % | - 22 % | -19% | - 26 % | - 36 % |
| 28 days | 9.0 | -7% | -9% | - 23 % | - 15 % | -19% | -27% |

Table 10 and 11 show resulting flexural strength data for the reference in MPa and for the carbonated and uncarbonated samples. Table 10 relates to the addition of (waste fibre cement powder from) autoclaved material, Table 11 relates to the addition of (waste fibre cement powder from) air-cured material. It is apparent from the data that the addition of carbonated autoclaved material provides the best results. The flexural strength for the addition of 5% and 10% is very close to the reference value. As it was seen for the compressive strength, the flexural strength values for the 20% addition improve with age, but at 28 days the strength is still less than that of the reference. The data on flexural strength have larger spread than those for compressive strength. The behaviour found for flexural strength seems generally in line with the behaviour found for compressive strength.

### Example 11

Further test sample were prepared from other materials. Sample 3 was obtained from a calcium silicate board. The board comprises autoclaved calcium silicate particles, Portland cement and a mixture of organic fibers and glass fibers and is produced by dry-pressing. The autoclaved calcium silicate particles comprise synthetic xonotlite particles having a core-shell structure, wherein the density of xonotlite crystals is larger in the shell than in the core. Such board is commercially available from Promat NV, Tisselt as Promatect L500. It has a gross density of 500 kg/m³ and comprises up to 6%by weight of fibres and up to 25% by weight of cement, wherein the weight% is based on total dry weight of the composition. The sheets used for sample 3 were cut in smaller pieces, after which the pieces were milled with a cutting mill (Retsch SM300 with a 500 µm sieve, and thereafter milling with a Retsch disk mill RS200 for 2 minutes) to obtain a powdered material. The material was sieved through a sieve of 100 µm. Sample 4 comprises autoclaved aerated concrete as sold under the tradename Ytong^{®}. It was provided in the form of a powder. 90wt% passed a 355 µm sieve, 54wt% passed a 150 µm sieve, and 24wt% passed a 63 µm sieve. Samples 5 is waste material from a material based on calcium aluminate cement to which xonotlite particles were added. Sample 5 was provided in the form of a powder with a particle size distribution such that 100wt% passed a 355 µm sieve, 92wt% passed a 150 µm sieve, and 31wt% passed a 63 µm sieve.

Carbonation was performed batchwise as specified in Example 2 at a temperature of 60°C, relative humidity of 90%, CO2-concentration of 18 % by volume and a water/solid mass ratio of 0.35 at the start of carbonation. After carbonation, the samples were dried at 105°C for 24 hours and milled with a Retch disk mill RS200 for 30 seconds.

The mineral composition before and after carbonation was determined by XRF. Loss on Ignition (LOI) was determined by heating to 1000°C. Results are shown in Table 11.

**Table 11 - XRF and LOI results for compositions 1-5. Other is the sum of K2O, MgO, Mn2O3, Na2O, TiO2. Organic fiber content is Total Organic Content for compositions as specified before.**

| Composition | 1 | 2 | 3 | 4 | 5 |
|---|---|---|---|---|---|
| Origin powder | Autoclave-cured fiber cement | Air-cured fiber cement | Air-cured calcium silicate board | Autoclaved Aerated Concrete (AAC) | Air-cured Calcium aluminate board |
| Before/after carbonation | Before | Before | Before | Before | Before |
| Al₂O₃ (wt%) | 3.4 | 3.7 | 2.4 | 1.3 | 29 |
| CaO (wt%) | 24 | 52 | 37 | 25 | 23 |
| SiO₂ (wt%) | 55 | 19 | 36 | 60 | 19 |
| Fe₂O₃ (wt%) | 1.6 | 2.4 | 1.0 | 0.3 | 0.3 |
| Other (wt%) | 1 | 2 | 1 | 1 | 1 |
| P₂O₅ + SO₃ (wt%) | 1 | 2 | 1 | 0 | <0.5 |
| LOI (wt%) | 14 | 19 | 20 | 11 | 26 |
| Organic content (TOC, wt%) | 2.7 | 1.2 | 1.1 | 0.3 | 0.9 |

Based on the XRF data, molar ratios for Calcium to Silicon (Ca/Si), Aluminum to Silicon (Al/Si) and Iron to Silicon (Fe/Si) were calculated. Results are shown in Table 12

**Table 12 - Ca/Si ratio, Al/Si ratio and Fe/Si ratio for compositions 1-5**

| Composition | 1 | 2 | 3 | 4 | 5 |
|---|---|---|---|---|---|
| Origin powder | Autoclave-cured fiber cement | Air-cured fiber cement | Air-cured calcium silicate board | Autoclaved Aerated Concrete (AAC) | Air-cured Calcium aluminate board |
| Before/after carbonation | Before | Before | Before | Before | Before |
| Ca/Si ratio | 0.47 | 2.93 | 1.13 | 0.44 | 1.28 |
| Al/Si ratio | 0.037 | 0.113 | 0.040 | 0.013 | 0.899 |
| Fe/Si ratio | 0.011 | 0.047 | 0.011 | 0.002 | 0.006 |

Tests were performed on these samples. Results are shown in Table 13. Calculated carbonation efficiencies for samples 3-5 were all above 80%. BET specific surface area was measured as specified in Example 6. Compressive and flexural strength were determined in accordance with EN-196 on mortars with 20wt% substitution of carbonated materials. Strength measurement was performed after 28 days. Reference was a mortar of only CEM-I.

**Table 13 - characterization of samples. Before and after refers to before and after carbonation. Compressive and flexural strength measured on mortars with 80wt% Portland cement and 20%wt of the specified waste.**

| Composition | Ref | 1 | 2 | 3 | 4 | 5 |
|---|---|---|---|---|---|---|
| BET (m²/g) before | | 33 | 14 | 24 | 25 | 15 |
| BET after | | 54 | 43 | 66 | 63 | 34 |
| Compressive strength (MPa) | 53.4 | 49.3 | 37.2 | 47.9 | 38.5 | 49.6 |
| Flexural strength (MPa) | 9 | 8.4 | 6.9 | 8.4 | 6.7 | 8.0 |

Review of the data in Table 13 indicates that compositions 2 and 4 led to mortars with significantly lower strength than compositions 1, 3 and 5 and the reference. While looking for an explanation, reference can be made to the ratios shown in Table 12. It turns out that composition 2 has a significantly higher Ca/Si ratio than any other samples. The amount of SiO2 in the XRF (19%) is also low. As to composition 4, the Ca/Si ratio is just slightly lower than that of composition 1. The amount of SiO2 in the XRF (60%) is 5% higher than in composition 1. However, the Al/Si ratio and the Fe/Si ratio are clearly lower than those for the other composition. Particularly the Al/Si ratio may be of relevance, as it is known that the Al-atom can be part of the C-S-H gel and may then have positive effect on the strength. The positive effect of Al seems also to be shown in composition 5, which has a very high Al/Si ratio in combination with a high (i.e. less good) Ca/Si ratio and a low Fe/Si ratio.

As to the performance of compositions 3 and 5, it is observed that these compositions are calcium silicate materials, comprising synthetic xonotlite-particles, which have needle-shaped crystals within a core-shell particle with a shell having a higher density than the core. The molecular formula of xonotlite is Ca₆Si₆O₁₇(OH)₂. During carbonation, xonotlite will be transformed, as the calcium atoms react with the CO₂ to form CaCO₃. The remaining silicon may form a silica-gel. FTIR measurements indicate formation of a different Si-O species than for the carbonated fiber cement materials. A peak becomes visible upon carbonation at 1085 cm⁻¹, whereas the corresponding peak appears at 1045 cm⁻¹ for the carbonated fiber cement samples.

A specific comparison between compositions 2 and 3 seems feasible and interesting. Both of these compositions are air-cured compositions comprising Portland Cement type I (CEM I) in addition to organic fibers. Composition 3 comprises additional calcium silicate particles, such as xonotlite. It is believed that those particles remain dispersed in the cement rather than reacting with the cement during air-curing. Composition 2 comprises additional limestone and amorphous silica, which however does not change the Ca/Si-ratio. Still, the strength results for the 20% addition of carbonated and milled waste material of composition 3 are much better than that of composition 2. This is deemed to indicate that the overall atomic composition is important for impact on strength.

### Example 12

Using the insights of Example 11, cementitious powders were defined based on mixing of waste powders having different compositions. Table 14 indicates the compositions and the Ca/Si, Al/Si and Fe/Si ratios for some waste powders in pure form, i.e. not contaminated by other waste.

**Table 14 - composition of pure waste powders as measured by XRF**

| Composition | A | B | C | D | E |
|---|---|---|---|---|---|
| Origin powder | Autoclave-cured fiber cement | Autoclave-cured fiber cement | Air-cured fiber cement | Air-cured calcium silicate board | Autoclaved Aerated Concrete (AAC) |
| Al₂O₃ (wt%) | 3.4 | 4.5 | 3.7 | 2.4 | 1.3 |
| CaO (wt%) | 24 | 29 | 52 | 37 | 25 |
| SiO₂ (wt%) | 55 | 48 | 19 | 36 | 60 |
| Fe₂O₃ (wt%) | 1.6 | 1.9 | 2.4 | 1.0 | 0.3 |
| TOC (wt%) | 2.7 | 1.8 | 1.2 | 1.1 | 0.3 |
| Ca/Si ratio | 0.64 | 0.47 | 2.93 | 1.13 | 0.44 |
| Al/Si ratio | 0.037 | 0.055 | 0.113 | 0.040 | 0.013 |
| Fe/Si ratio | 0.011 | 0.015 | 0.047 | 0.011 | 0.002 |

Sample A, C, D and E are identical to samples 1, 2, 3 and 4 respectively. Sample B was based on production waste from a high-density autoclave-cured fiber cement plate sold under the tradename tectiva^{®}, having a density of 1.6 kg/dm3. The material was treated by means of the micronizing apparatus as described in EP4299545A1 and shown in Figure 1 thereof. This involved crushing of the plates, following by milling and sieving. The crushed material had a particle size below 5 mm. The material was treated with a vertical roller mill to a size of less than 100 µm. The vertical roller mill was provided with an air-classifier in an open circuit. The chamber of the vertical roller mill extended to the air-classifier and heated air flow upwards to drag milled particles towards the air-classifier. The sieve was arranged downstream of the air-classifier. The specified data are those of the material after comminution and sieving.

It is now desired to prepare a carbonatable cementitious powder with a Ca/Si ratio of 1.1, a TOC of at most 1.5 wt% and an Al/Si ratio of at least 0.05. Starting point is waste powder B. The content of CaO is preferably at least 35wt%. For sake of clarity, all wt% in the following are wt% based on dry weight.

**Table 15**

| Composition | 100%B | B1= 60%B + 40% C | 90%B1 + 10% D | 98%B1 + 2%E |
|---|---|---|---|---|
| Al₂O₃ (wt%) | 4.5 | 4.2 | 4.0 | 4.1 |
| CaO (wt%) | 29 | 38 | 38 | 38 |
| SiO₂ (wt%) | 48 | 36.5 | 36 | 37 |
| Fe₂O₃ (wt%) | 1.9 | 2.1 | 2.0 | 2.0 |
| TOC (wt%) | 1.8 | 1.56 | 1.48 | 1.50 |
| Ca/Si ratio | 0.47 | 1.11 | 1.12 | 1.10 |
| Al/Si ratio | 0.055 | 0.067 | 0.065 | 0.065 |
| Fe/Si ratio | 0.015 | 0.021 | 0.020 | 0.021 |

Table 15 shows the effect of combining waste powders. When preparing a first mixture of 60% autoclave-cured and 40% air-cured fiber cement waste, the Ca/Si ratio is 1.11 which is according to the specification. The CaO content is sufficient, and the Al/Si ratio is well above the 0.05 limit. However, the TOC is higher than the limit (1.56 vs 1.50%). This could be solved by addition 10% of a Calcium Silicate waste material. However, available volumes of calcium silicate waste material are typically small. It is therefore preferable, to add waste powder E (autoclaved aerated concrete). A 2% addition turns out to lower the TOC to 1.50wt%, while other parameters remain within specification.

Table 16 shows the effect of a contamination of the waste powder B 1, comprising 60% B (auto-claved fiber cement with reduced fiber content) and 40%C (air-cured fiber cement waste). The contamination is herein chosen to be in total 20% (of the modified composition), of which 7% of autoclave-cured fiber cement waste of composition A and 13% air-cured fiber cement waste. It is shown as composition B2. As a consequence of this contamination, the Ca/Si ratio increases to 1.17, which is not in accordance with the specification. Adding 6% of waste powder E (autoclaved aerated concrete) brings the Ca/Si ratio back to 1.11. At the same time, the fiber content decreases to 1.49 wt.%, below the 1.50 wt.% limit.

**Table 16**

| Composition | B1= 60%B + 40% C | B2= 48%B+ 7%A +45%C | 100%B2+6%E |
|---|---|---|---|
| Al₂O₃ (wt%) | 4.2 | 4.0 | 3.9 |
| CaO (wt%) | 38 | 39 | 38 |
| SiO₂ (wt%) | 36.5 | 35.5 | 37 |
| Fe₂O₃ (wt%) | 2.1 | 2.1 | 2.0 |
| TOC (wt%) | 1.56 | 1.56 | 1.49 |
| Ca/Si ratio | 1.11 | 1.17 | 1.11 |
| Al/Si ratio | 0.067 | 0.067 | 0.062 |
| Fe/Si ratio | 0.021 | 0.022 | 0.020 |

Table 17 shows the effect of a bigger contamination. Herein, the concentration of autoclave-cured waste B is reduced to half, from 60% to 30%. One might also see this as a shift in supply of waste materials. The revised composition is shown as B3. While the TOC is fine, the Ca/Si-ratio is 1.45, well above the specified 1.1. Adding 25% of waste powder E (autoclaved aerated concrete) reduces the Ca/Si-ratio to 1.12. The Al/Si-ratio herein decreases too, to 0.053. This is still within specification.

Another situation is shown as composition B4, wherein the waste powder predominantly comprises air-cured fiber cement waste, with some autoclave-cured fiber cement waste. The mutual weight ratio is 4:1. In this case, the addition of 60% of waste powder E brings the Ca/Si ratio back to 1.1, but reduces the Al/Si to 0.44, below the 0.50 limit. The addition of 45% of waste powder E in combination with 15% of waste powder B brings the Ca/Si ratio to 1.14 and the Al/Si ratio to 0.51.

**Table 17**

| Composition | B1= 60%B + 40% C | B3= 30%B+10%A +60%C | 100%B3 +25%E | B4 = 20%B + 80%C | 100%B4+ 60%E | 100%B4 + 45%E + 15%B |
|---|---|---|---|---|---|---|
| Al₂O₃ (wt%) | 4.2 | 3.9 | 3.4 | 3.8 | 2.9 | 3.2 |
| CaO (wt%) | 38 | 42 | 39 | 47 | 39 | 39 |
| SiO₂ (wt%) | 36.5 | 31 | 37 | 25 | 38 | 37 |
| Fe₂O₃ (wt%) | 2.1 | 2.1 | 1.8 | 2.3 | 1.5 | 1.7 |
| TOC (wt%) | 1.56 | 1.50 | 1.26 | 1.29 | 0.92 | 1.05 |
| Ca/Si ratio | 1.11 | 1.45 | 1.12 | 2.04 | 1.10 | 1.14 |
| Al/Si ratio | 0.067 | 0.073 | 0.053 | 0.09 | 0.044 | 0.051 |
| Fe/Si ratio | 0.021 | 0.026 | 0.018 | 0.034 | 0.015 | 0.017 |

Table 18 specifies a situation wherein the primary waste powder is waste powder E (autoclaved aerated concrete). As apparent from Table 18, composition E has ow to very low ratios Ca/Si, Al/Si and Fe/Si. These ratios can be increased by mixing 75% E with 25% waste powder C (air-cured fiber cement waste) to provide composition E1. This results in a SiO2 content of 50wt%. However, the Al/Si ratio remains quite low. The addition of 10% powder B (autoclave-cured fiber cement waste) slightly increases the Al/Si ratio to 0.025, which is double of the initial amount, but less than the specified limit. An alternative approach to achieve a composition comprising 50% SiO2 is a combination of the waste powders E and B in a mutual weight ratio of 1:4. This leads to an organic content of 1.47wt% and an Al/Si ratio of 0.045. If a composition with 40% SiO2 is preferred, the waste powder E can be mixed with waste powder C in a 1:1 weight ratio.

**Table 18**

| Composition | E | E1 = 75%E + 25%C | 100%E1 +10%B | E2 = 20%E + 80%B | E3 = 50%E + 50%C |
|---|---|---|---|---|---|
| Al₂O₃ (wt%) | 1.3 | 1.9 | 2.1 | 3.9 | 2.5 |
| CaO (wt%) | 25 | 32 | 31.5 | 28 | 39 |
| SiO₂ (wt%) | 60 | 50 | 50 | 51 | 40 |
| Fe₂O₃ (wt%) | 0.3 | 0.8 | 0.9 | 1.6 | 1.3 |
| TOC (wt%) | 0.3 | 0.52 | 0.63 | 1.47 | 0.74 |
| Ca/Si ratio | 0.44 | 0.68 | 0.67 | 0.59 | 1.04 |
| Al/Si ratio | 0.013 | 0.022 | 0.025 | 0.045 | 0.037 |
| Fe/Si ratio | 0.002 | 0.006 | 0.007 | 0.011 | 0.012 |

According to a further aspect of the disclosure of the present application, a cementitious powder is provided which comprises organic fibers in addition to calcium-silicate-hydrates in crystalline and/or amorphous form, which cementitious powder is configured for carbonation and subsequent reuse in cement, wherein said cementitious powder is characterized by a Ca/Si-ratio in the range of 0.9-1.5, an Al/Si-ratio in the range of at least 0.04, for instance up 1, preferably 0.5 or 0.2, and an organic fiber content of at most 2% by weight based on organic carbon content, and preferably at most 1.5% by weight based on organic carbon content.

According to a preferred implementation of said aspect, the Ca/Si ratio is in the range of 1.0-1.2. According to another preferred implementation, the Al/Si ratio is in the range of 0.05-0.1.

According to a further implementation the cementitious powder is further characterized by a Fe/Si ratio of at least 0.01, for instance in the range of 0.01-0.1.

According to another implementation, the Ca/Si ratio is in the range of 1.0-1.5 and the Al/Si ratio is in the range of 0.4-1.0. Such ratios can for instance be obtained by addition of calcium aluminate cements, fly ashes, kaolin mining waste, optionally in combination with a further source of silica. Experiments have shown that a high Al/Si ratio may be beneficial for strength development.

According to again a preferred implementation of said aspect, the organic fibers in the cementitious powder have an arithmetic average length (L(n)) in the range of 0.25 mm to 0.50 mm, preferably in the range of 0.30 mm to 0.45 mm. More preferably, said organic fibers have a polydispersity in the range of 1.05-1.25, preferably 1.10-1.20. This facilitates flowability of the composition.

According to another implementation, the cementitious powder comprises waste material from fiber cement products. According to a further implementation, the cementitious powder is a waste powder, and hence comprises at least 95wt% of waste, preferably at least 98wt%, more preferably at least 99wt% and optionally 100wt% waste material. Waste material is especially waste material from construction materials. Waste material may originate from production sites, installation sites, demolition sites and/or storage. Waste material is further characterized in that it is comminuted into a powder. The comminution may be performed in different consecutive steps.

According to again a further implementation, the cementitious powder has a particle size distribution such that the d90 is less than 150 µm, preferably less than 100 µm, and wherein the d50 is preferably in the range of 10-60 µm, preferably 20-50 µm.

According to another implementation, the cementitious powder is obtainable by mixing of a plurality of waste powders.

According to again a further implementation, the CaO content in the cementitious powder is at least 34wt% as identified by XRF. Preferably, the CaO content is at most 44wt%. Preferably, the CaO content in the cementitious powder is in the range of 35-40wt%.

According to again a further implementation, the SiO2 content in the cementitious powder is at least 34wt% as identified by XRF. Preferably, the SiO2 content is at most 44wt%. Preferably, the SiO2 content in the cementitious powder is in the range of 35-40wt%.

According to again a further implementation, the Al2O3 content in the cementitious powder is at least 2.5 wt% as identified by XRF. Preferably, the CaO content is at most 7.5wt%. Preferably, the CaO content in the cementitious powder is in the range of 3-5wt%.

According to another aspect, a cementitious powder is provided obtainable by carbonation of the cementitious powder of the preceding paragraphs, and/or the invention.

According to a further aspect of the disclosure of the present application, a cementitious powder is provided which comprises organic fibers in addition to calcium-silicate-hydrates in crystalline and/or amorphous form, which cementitious powder is configured for carbonation and subsequent reuse in cement, wherein said cementitious powder is characterized by a Ca/Si-ratio in the range of 0.9-1.3, an Al/Si-ratio in the range of 0.04-0.2, and an organic fiber content of at most 2% by weight based on organic carbon content, and preferably at most 1.5% by weight based on organic carbon content.

## Claims

1. A cementitious powder comprising organic fibers in addition to calcium-silicate-hydrates in crystalline and/or amorphous form, which cementitious powder is configured for carbonation and subsequent reuse in cement, wherein said organic fibers are present in an organic fiber content of at most 2% by weight based on organic carbon content of the cementitious powder, wherein said cementitious powder is **characterized by** a Ca/Si-molar ratio in the range of 0.9-1.5, an Al/Si-molar ratio in the range of at least 0.04 and up to 1.

2. The cementitious powder as claimed in claim 1, having an organic fiber content of at most 1.5% by weight based on organic carbon content.

3. The cementitious powder as claimed in any of the claims 1-2, wherein the said Ca/Si molar ratio is in the range of 0.9-1.3, preferably 1.0-1.2.

4. The cementitious powder as claimed in any of the preceding claims, wherein the Al/Si molar ratio is in the range of 0.05-0.10.

5. The cementitious powder as claimed in any of the preceding claims, having a Fe/Si molar ratio of at least 0.005, preferably 0.01 to 0.03.

6. The cementitious powder as claimed in any of the preceding claims, having a SiO2-content of at least 45% by weight as identified by XRF.

7. The cementitious powder as claimed in any of the preceding claims, which is obtainable by mixing of waste powder, comprises a waste powder from fiber cement waste material.

8. A method of generating a carbonatable cementitious powder as claimed in any of the preceding claims, comprising the steps of:
- comminuting fiber cement waste material;
- removing organic fibers from said comminuted fiber cement waste material, to obtain a first waste powder,
- comminuting a further waste material with a Ca/Si ratio of at most 0.6 and a SiO2 content of at least 50wt% as identified with XRF, therewith providing a second waste powder, and
- mixing the first and the second waste powder.

9. The method as claimed in claim 8, wherein the further waste material is chosen from a waste material chosen from the group of autoclaved aerated concrete, fly ash and kaolin mining waste.

10. The method as claimed in any of the preceding claims 8 or 9, wherein the fiber cement waste material originates from fiber cement products with a density of at least 1.2 kg/dm³, as specified in accordance with EN12467.

11. The method as claimed in claim 8-10, wherein said second waste powder is free of fibers.

12. The method as claimed in any of the preceding claims 8-11, wherein the first waste powder comprises waste material from autoclave-cured fiber cement and air-cured fiber cement.

13. The method as claimed in claim 11 or 12, wherein the second waste powder comprises waste material from aerated concrete.

14. A method of generating a supplementary cementing material, comprising the steps of
- providing the cementitious powder any of the claims 1-7, and
- carbonating said cementitious powder.

15. Supplementary cementing material obtainable according to claim 14.
